Europäisches Patentamt

European Patent Office

Office européen des brevets

(19)

(11) **EP 0 863 194 B1**

(12) **FASCICULE DE BREVET EUROPEEN**

(45) Date de publication et mention
de la délivrance du brevet:
**21.01.2004 Bulletin 2004/04**

(51) Int Cl.⁷: **C09K 3/18**, B01D 12/00,
F26B 5/00

(21) Numéro de dépôt: **98400315.2**

(22) Date de dépôt: **11.02.1998**

(54) **Compositions pour le séchage de surfaces solides**

Zusammensetzungen zum Trocknen von Oberflächen

Compositions for the drying of solid surfaces

(84) Etats contractants désignés:
**AT BE CH DE ES FR GB IE IT LI NL**

(30) Priorité: **04.03.1997 FR 9702550**

(43) Date de publication de la demande:
**09.09.1998 Bulletin 1998/37**

(73) Titulaire: **Atofina**
**92800 Puteaux (FR)**

(72) Inventeur: **Michaud, Pascal**
**95210 Saint-Gratien (FR)**

(56) Documents cités:
**FR-A- 2 691 473          FR-A- 2 732 356**

• **DATABASE WPI Section Ch, Week 9349 Derwent
Publications Ltd., London, GB; Class E19, AN
93-391817 XP002044658 & JP 05 293 303 A
(ASAHI CHEM IND CO LTD) , 9 novembre 1993**

## Description

L'invention concerne le domaine du séchage et a plus particulièrement pour objet des compositions pour éliminer l'eau mouillant superficiellement des surfaces solides, notamment les matériaux électroniques (circuits imprimés ou intégrés), les pièces mécaniques de précision, les substrats en verre et le matériel militaire, aérospatial, aéronautique ou médical.

Le procédé usuel de démouillage des surfaces solides consiste à immerger le substrat humide dans une solution organique d'un agent tensioactif ionique ou non ionique. Jusqu'à ces derniers temps, le solvant organique couramment utilisé était le 1,1,2-trichloro-1,2,2-trifluoroéthane (CFC 113), mais son emploi a été interdit en raison de son action néfaste sur la couche d'ozone stratosphérique.

Le 1-chloro-1,1-difluoroéthane (HCFC 141b), proposé comme substitut du CFC 113 dans les compositions de démouillage, voit son emploi déjà réglementé et ne pourra plus être utilisé à brève échéance.

Pour remplacer le CFC 113 et le HCFC 141b, on a envisagé d'utiliser des hydrocarbures fluorés qui, comme le 1,1,1,3,3-pentafluorobutane (365 mfc), le 1,1,1,2,2,4,4-heptafluorobutane (347 mcf), le (perfluorobutyl)-éthylène ($C_4F_9CH=CH_2$), le 1H-perfluorohexane, le n-perfluorohexane (PF 5060) ou le 1,1,1,2,3,4,4,5,5,5-décafluoropentane (43-10 mee), et la perfluoro(méthylmorpholine) (PF 5052), sont sans action sur la couche d'ozone stratosphérique (ODP nul), ne présentent pas de point d'éclair et, comme le montre le tableau suivant, possèdent des caractéristiques physiques proches de celles du CFC 113 et du HCFC 141b.

| Solvant | Point d'ébullition (°C) | Tension superficielle à 25°C (mN/m) | Densité à 20°C |
|---|---|---|---|
| CFC 113 | 47,6 | 17,7 | 1,57 |
| HCFC 141b | 32 | 19,5 | 1,23 |
| 365 mfc | 40 | 16,2 | 1,27 |
| 347 mcf | 33,3 | 14,2 | 1,42 |
| $C_4F_9CH=CH_2$ | 59 | 13,6 | 1,46 |
| $C_6F_{13}H$ | 71 | 13 | 1,70 |
| PF 5060 | 56 | 12 | 1,68 |
| PF 5052 | 50 | 13 | 1,70 |
| 43-10 mee | 54 | 14,1 | 1,58 |

Cependant, le remplacement du CFC 113 ou du HCFC 141b par un hydrocarbure fluoré tel que ceux précédemment cités n'est pas satisfaisant car les agents tensioactifs ioniques, les plus souvent utilisés dans les compositions de démouillage, y sont insolubles. Les agents tensioactifs non ioniques sont solubles dans ces hydrocarbures fluorés, mais leur efficacité en démouillage est souvent insuffisante.

Pour résoudre ce problème dans le cas du 365 mfc, il a été proposé dans la publication de brevet JP 05-168805 d'ajouter un co-solvant choisi parmi les alcools, les cétones, les alcanes et les éthers. Cependant, quand le co-solvant est un alcool comprenant de 1 à 3 atomes de carbone ou une cétone, il est rapidement éliminé avec l'eau, provoquant la précipitation rapide de l'agent tensioactif. Quant aux alcanes et aux éthers, ils présentent un point d'éclair, ce qui pose un problème de sécurité des installations de démouillage. Le brevet JP 05-293303 décrit l'utilisation du 2,2,3,3,3-pentafluoropropanol pour éviter la précipitation à basse température du tensioactif fluoré dans les compositions de démouillage contenant un hydrocarbure fluoré et un tensioactif.

Il a maintenant été trouvé que l'emploi du tridécafluorooctanol ($C_6F_{13}CH_2CH_2OH$) et plus généralement d'un alcool polyfluoré non miscible à l'eau permet de solubiliser la plupart des agents tensioactifs de démouillage dans les hydrocarbures fluorés sans effet nocif sur la couche d'ozone.

La présente invention a donc pour objet, comme composition utile pour le démouillage de surfaces solides, une solution d'au moins un agent tensioactif dans un mélange d'au moins un solvant fluoré et d'au moins un alcool polyfluoré de formule générale:

$$Rf - (CH_2)_n - OH \qquad (I)$$

dans laquelle n est égal à 1 ou 2 et Rf représente un radical perfluoroalkyle linéaire ou ramifié contenant de 4 à 8 atomes de carbone. Une telle composition ne présente pas de point d'éclair dans les conditions standard de détermination (norme ASTM D 3828).

Conformément à la présente invention, le solvant fluoré, liquide à température ambiante, ne doit pas contenir d'autres atomes d'halogène que le fluor, mais il peut contenir des hétéroatomes tels que l'oxygène ou l'azote. On utilise avantageusement un solvant fluoré dont le point d'ébullition normal est compris entre 20 et 100°C, de préférence entre 30 et 75°C. Conviennent particulièrement bien les hydrocarbures fluorés, saturés ou insaturés, contenant de 3 à 6 atomes de carbone comme, par exemple, les composés 365 mfc, 347 mcf, $C_4F_9CH=CH_2$, PF 5060 et 43-10 mee précédemment cités, ainsi que le 1H-perfluorohexane ($C_6F_{13}H$) et le 1,1,1,2,2,3,3,4,4-nonafluorohexane.

Les alcools polyfluorés de formule (I) sont des produits connus. Parmi ceux-ci on préfère utiliser ceux dans lesquels n est égal à 2. Un alcool polyfluoré plus particulièrement préféré est le tridécafluorooctanol ($C_6F_{13}CH_2CH_2OH$, ci-après TDFO).

La quantité d'alcool polyfluoré, nécessaire pour solubiliser complètement l'agent tensioactif dans la composition de démouillage selon l'invention, peut varier dans de larges limites selon la nature du solvant fluoré et de l'agent tensioactif mis en oeuvre et en fonction de la concentration en agent tensioactif désirée. Pour une concentration usuelle d'agent tensioactif (0,01 à 0,5 % en poids), une teneur en alcool polyfluoré allant jusqu'à 30 % en poids est généralement suffisante pour obtenir la solubilisation complète de l'agent tensioactif; dans certains cas, une proportion très faible d'alcool polyfluoré (0,1 %) s'avère même suffisante. Par conséquent, dans la composition de démouillage selon l'invention, la teneur en alcool polyfluoré peut aller de 0,1 à 30 % en poids, mais elle est avantageusement comprise entre 0,5 et 5 %.

Dans la composition selon l'invention, l'agent tensioactif peut être n'importe quel agent tensioactif habituellement utilisé dans les compositions de démouillage. Ainsi, peuvent être utilisés des agents tensioactifs non ioniques comme les esters gras (par exemple, le caprylate de caprylamine et le caproate de caprylamine, de dodécylamine ou de stéarylamine), des agents tensioactifs non ioniques fluorés tels que, par exemple, les adduits d'oxyde d'éthylène sur un alcool polyfluoré de formule (I), les esters d'acides polyfluorocarboxyliques, les polyfluoroalkyl-aminoalcools, les sulfures ou polysulfures de polyfluoroalkyle, les polyfluoroalcane-carbonamides ou sulfonamides. On peut aussi utiliser des agents tensioactifs anioniques (par exemple, un acide polyfluorosulfonique), mais on préfère utiliser des agents tensioactifs cationiques et plus particulièrement ceux obtenus par réaction d'un acide mono- ou di-alkylphosphorique de formule générale :

$$(RO)_p(HO)_{2-p}PO_2H \qquad\qquad (II)$$

dans laquelle p est un nombre compris entre 1 et 2 et R désigne un radical alkyle, linéaire ou ramifié, contenant de 1 à 18 atomes de carbone, avec un chlorure d'ammonium quaternaire de formule générale :

$$R'_2N^{\oplus}R''_2\ Cl^{\ominus} \qquad\qquad (III)$$

dans laquelle R' et R", identiques ou différents, représentent chacun un atome d'hydrogène ou un radical alkyle ou hydroxyalkyle contenant 1 à 4 atomes de carbone, et une amine fluorée de formule générale :

$$R_F - X - NR^1R^2 \qquad\qquad (IV)$$

dans laquelle $R_F$ représente un radical perfluoroalkyle linéaire contenant de 2 à 20 atomes de carbone, X représente un pont divalent, et les symboles $R^1$ et $R^2$, identiques ou différents, représentent chacun un atome d'hydrogène ou un radical alkyle ou hydroxyalkyle contenant 1 à 4 atomes de carbone.

De tels agents tensioactifs cationiques et leur préparation sont décrits dans les brevets FR 2 522 007 et 2 691 473. Comme dans les brevets précités, on préfère utiliser :

- les acides (II) dans lesquels R est un radical butyle, hexyle, 2-éthylhexyle, octyle ou tridécyle et, plus particulièrement, les mélanges d'acide monoalkylphosphorique et d'acide dialkylphosphorique dont la proportion pondérale des deux acides est comprise entre environ 60/40 et 40/60,
- les chlorures d'ammonium quaternaire (III) dans lesquels R' est un radical dodécyle ou octadécyle et R" est un radical méthyle, ou les produits commerciaux contenant majoritairement ces chlorures,
- les amines fluorées de formule :

$$R_FC_2H_4SO_2NHCH_2CH_2CH_2N(CH_3)_2$$

ou

$$R_F C_2H_4 CONHCH_2CH_2CH_2N(CH_3)_2$$

Comme dans les compositions de la technique antérieure, la teneur en agent(s) tensioactif(s) de la composition de démouillage selon l'invention peut varier dans de larges limites. Cette teneur est généralement faible (de 0,01 à 0,5 % en poids, de préférence 0,04 à 0,2 %) dans les compositions de démouillage prêtes à l'emploi, mais elle peut atteindre jusqu'à 30 % en poids dans des compositions concentrées qu'il suffit de diluer pour l'opération de démouillage.

Les surfaces solides desquelles l'eau peut être éliminée au moyen d'une composition selon l'invention peuvent être très diverses, pourvu cependant que leur substance (verre, métal, matière réfractaire, matière plastique,...) soit insoluble dans et inattaquable par le(s) solvant(s) fluoré(s) de la composition selon l'invention.

Les exemples suivants illustrent l'invention sans la limiter. Les agents tensioactifs cationiques TA1 et TA2 ont été préparés à partir des produits commerciaux suivants :

-   acide butylphosphorique $(C_4H_9O)_{1,5}(OH)_{0,5}PO_2H$ présentant les indices d'acidité suivants :

> acidité forte 0,566 équivalent pour 100 g
> acidité faible 0,276 équivalent pour 100 g

ce qui correspond à un mélange contenant environ 40 % d'acide monobutylphosphorique et 60 % d'acide dibutylphosphorique.

-   Noramium M2C: mélange de différents homologues de formule :

$$R'_2N \oplus (CH_3)_2 \ Cl \ominus$$

dont la répartition des chaînes grasses (R') est la suivante :

| | |
|---|---|
| $C_8$ | 3% |
| $C_{10}$ | 6 % |
| $C_{12}$ | 56 % |
| $C_{14}$ | 18 % |
| $C_{16}$ | 10 % |
| $C_{18}$ saturé | 2 % |
| $C_{18}$ insaturé | 5 % |

Ce produit commercial est à 75% de matière active et contient 0,161 équivalent chlorure pour 100 g.

### Préparation de l'agent tensioactif TA1

Dans 150 g de HCFC 141 b, on ajoute successivement et sous agitation 2,69 g d'acide butylphosphorique, 3,91 g (soit 7,6 méq.) de l'amine fluorée $C_6F_{13}C_2H_4SO_2NHCH_2CH_2CH_2N(CH_3)_2$, 3 g d'une solution méthanolique à 10 % d'hydroxyde de sodium (soit 7,6 méq.NaOH) et 8,32 g de Noramium M2C. Cette dernière addition provoque la formation immédiate d'un précipité de chlorure de sodium qu'on élimine par filtration (poids de NaCl recueilli : 0,4 g).

Après élimination du précipité de chlorure de sodium, le filtrat est ensuite évaporé à sec à 110°C en étuve. On obtient ainsi 14,8 g d'agent tensioactif TA1.

### Préparation de l'agent tensioactif TA2

On opère comme précédemment mais en remplaçant les 150 g de HCFC 141 b par 300 g de TDFO et en supprimant l'étape finale d'évaporation à sec. On obtient ainsi une solution à environ 5 % d'agent tensioactif TA2 dans le TDFO.

### EXEMPLE 1

On prépare une solution de démouillage en dissolvant 100 mg d'agent tensioactif TA1 dans un mélange de 95 g de HFC 365 mfc et 5 g de TDFO, puis on introduit cette solution dans un bécher placé dans une petite cuve à ultrasons BRANSON 2200.

Une grille en inox de 20 x 50 mm, préalablement mouillée par immersion dans l'eau, est ensuite plongée dans la solution de démouillage et maintenue sous agitation ultrasonique pendant une minute.

Après avoir été retirée de la solution de démouillage, la grille est immergée dans l'alcool absolu et le dosage d'eau par la méthode de Karl Fisher indique que 94 % de l'eau a été éliminée.

On obtient le même résultat si on remplace l'alcool fluoré TDFO par la même quantité d'un mélange industriel d'alcools de formule Rf-CH$_2$CH$_2$-OH, la distribution des radicaux Rf étant centrée sur C$_6$.

Si on remplace l'alcool fluoré TDFO par la même quantité de n-pentanol ou de n-hexanol, le taux d'élimination de l'eau n'est que de 60 % et 72 % respectivement.

**EXEMPLE 2**

On prépare une solution de démouillage en mélangeant 1 g de la solution à 5 % d'agent tensioactif TA2 et 99 g de HFC 365 mfc. On obtient ainsi une solution de démouillage à 500 ppm d'agent tensioactif TA2 que l'on utilise comme à l'exemple 1. Le taux d'élimination de l'eau est 95 %.

On obtient sensiblement le même résultat en utilisant une solution de démouillage à 0,1 % d'agent tensioactif TA2 dans un mélange de 99 g de HFC 365 mfc et 1 g de TDFO.

**EXEMPLES 3 à 11**

On opère comme à l'exemple 2, mais en remplaçant le solvant HFC 365 mfc par d'autres solvants fluorés. Les conditions opératoires et les résultats sont rassemblés dans le tableau suivant.

| Exemple | Solvant | (%) | % de TDFO | TA2 (ppm) | Eau éliminée (%) |
|---|---|---|---|---|---|
| 3 | 347 mcf | 98 | 2 | 500 | 93 |
| 4 | C$_4$F$_9$CH=CH$_2$ | 95 | 5 | 1000 | 92 |
| 5 | C$_4$F$_9$CH=CH$_2$ | 99 | 1 | 500 | 95 |
| 6 | C$_4$F$_9$CH$_2$CH$_3$ | 99 | 1 | 500 | 91 |
| 7 | C$_4$F$_9$CH$_2$CH$_3$ | 98 | 2 | 500 | 92 |
| 8 | C$_6$F$_{13}$H | 98 | 2 | 500 | 91 |
| 9 | PF 5060 | 99 | 1 | 500 | 92 |
| 10 | PF 5052 | 99 | 1 | 500 | 94 |
| 11 | 43-10 mee | 98 | 2 | 500 | 94 |

**EXEMPLE 12**

On opère comme à l'exemple 1, mais en utilisant une solution de démouillage obtenue en dissolvant dans un mélange de 90 g de HFC 365 mfc et 10 g de TDFO 100 mg de N,N'-dioléoyl-N-oléyl-propylènediamine (ci-après tensioactif TA3). Le taux d'élimination de l'eau est 91 %.

**EXEMPLE 13**

On opère comme à l'exemple 1, mais en utilisant une solution de démouillage obtenue en dissolvant dans un mélange de 99 g de HFC 365 mfc et 1 g de TDFO 100 mg de l'adduit de 6 moles d'oxyde d'éthylène sur une mole de TDFO. Le taux d'élimination de l'eau est de 90 %.

**EXEMPLE 14**

Dans les bacs de démouillage et de décantation d'une machine de séchage de 33 litres de capacité, on charge 22 litres de la solution de démouillage de l'exemple 2 et 11 litres de HFC 365 mfc pur dans la cuve de rinçage.

Une grille inox humide, provenant d'un traitement préalable de lessivage et rinçage en milieu aqueux, est plongée dans le bac de démouillage pendant 3 minutes, puis rincée pendant 3 minutes dans le HFC 365 mfc pur à l'ébullition.

L'évaluation de la performance de séchage a été effectuée de la façon suivante:

La grille est ensuite immergée dans 100 g d'éthanol absolu dont la teneur en eau a préalablement été déterminée par la méthode Karl-Fisher. Un nouveau dosage effectué après immersion de la grille ne révèle aucune augmentation de la teneur en eau, ce qui signifie que la composition selon l'invention permet d'obtenir une élimination quasi complète de l'eau.

**Revendications**

1.  Composition de démouillage, **caractérisée en ce qu'**elle consiste en une solution d'au moins un agent tensioactif dans un mélange d'au moins un solvant fluoré et d'au moins un alcool polyfluoré de formule :

$$Rf - (CH_2)_n - OH \qquad (I)$$

dans laquelle n est égal à 1 ou 2 et Rf représente un radical perfluoroalkyle linéaire ou ramifié contenant de 4 à 8 atomes de carbone.

2.  Composition selon la revendication 1 contenant au moins un alcool de formule (I) dans laquelle n est égal à 2.

3.  Composition selon la revendication 1 dans laquelle l'alcool de formule (I) est le tridécafluorooctanol $(C_6F_{13}CH_2CH_2OH)$.

4.  Composition selon l'une des revendications 1 à 3 dans laquelle le solvant fluoré a un point d'ébullition normal compris entre 20 et 100°C, de préférence entre 30 et 75°C.

5.  Composition selon la revendication 4 dans laquelle le solvant fluoré est un hydrocarbure fluoré, saturé ou insaturé, contenant de 3 à 6 atomes de carbone.

6.  Composition selon la revendication 5 dans laquelle l'hydrocarbure fluoré est choisi parmi le 1,1,1,3,3-pentafluorobutane, le 1,1,1,2,2,4,4-heptafluorobutane, le 1,1,1,2,3,4,4,5,5,5-décafluoropentane, le 1,1,1,2,2,3,3,4,4-nonafluorohexane, le 1 H-perfluorohexane, le n-perfluorohexane, le (perfluorobutyl)-éthylène, et la perfluoro-(méthylmorpholine).

7.  Composition selon l'une des revendications 1 à 6 dans laquelle l'agent tensioactif est un agent tensioactif cationique obtenu par réaction d'un acide mono- ou di-alkylphosphorique de formule générale :

$$(RO)_p(HO)_{2-p}PO_2H \qquad (II)$$

dans laquelle p est un nombre allant de 1 à 2 et R désigne un radical alkyle, linéaire ou ramifié, contenant de 1 à 18 atomes de carbone, avec un chlorure d'ammonium quaternaire de formule:

$$R'_2N \oplus R''_2 \ Cl \ominus \qquad (III)$$

dans laquelle R' et R", identiques ou différents, représentent chacun un atome d'hydrogène ou un radical alkyle ou hydroxyalkyle contenant 1 à 4 atomes de carbone, et une amine fluorée de formule générale :

$$R_F - X - NR^1R^2 \qquad (IV)$$

dans laquelle $R_F$ représente un radical perfluoroalkyle linéaire contenant de 2 à 20 atomes de carbone, X représente un pont divalent, et les symboles $R^1$ et $R^2$, identiques ou différents, représentent chacun un atome d'hydrogène ou un radical alkyle ou hydroxyalkyle contenant 1 à 4 atomes de carbone.

8.  Composition selon la revendication 7 dans laquelle R est un radical butyle, hexyle, 2-éthylhexyle, octyle ou tridécyle, R' est un radical dodécyle ou octadécyle, R" est un radical méthyle, X est un pont $-CH_2CH_2SO_2NHCH_2CH_2CH_2-$ ou $C_2H_4CONHCH_2CH_2CH_2-$ et $R^1$ et $R^2$ sont des radicaux méthyle.

9.  Composition selon l'une des revendications 1 à 8 dans laquelle la teneur en alcool(s) polyfluoré(s) est comprise entre 0,1 et 30% en poids, de préférence entre 0,5 et 5%.

10. Composition selon l'une des revendications 1 à 9 dans laquelle la teneur en agent(s) tensio-actif(s) est comprise entre 0,01 et 0,5 % en poids, de préférence entre 0,04 et 0,2%.

11. Composition selon l'une des revendications 1 à 9 sous forme de concentré contenant jusqu'à 30 % en poids d'agent (s) tensio-actif(s).

12. Utilisation d'une composition selon l'une des revendications 1 à 10 pour le démouillage de surfaces solides.

**Claims**

1. Dewetting composition, **characterized in that** it is composed of a solution of at least one surface-active agent in a mixture of at least one fluorinated solvent and of at least one polyfluorinated alcohol of general formula:

$$Rf\text{-}(CH_2)_n\text{-}OH \qquad \qquad (I)$$

in which n is equal to 1 or 2 and Rf represents a linear or branched perfluoroalkyl radical containing from 4 to 8 carbon atoms.

2. Composition according to Claim 1, containing at least one alcohol of formula (I) in which n is equal to 2.

3. Composition according to Claim 1, in which the alcohol of formula (I) is tridecaf luorooctanol ($C_6F_{13}CH_2CH_2OH$).

4. Composition according to one of Claims 1 to 3, in which the fluorinated solvent has a normal boiling point of between 20 and 100°C, preferably between 30 and 75°C.

5. Composition according to Claim 4, in which the fluorinated solvent is a saturated or unsaturated fluorinated hydrocarbon containing from 3 to 6 carbon atoms.

6. Composition according to Claim 5, in which the fluorinated hydrocarbon is chosen from 1,1,1,3,3-pentafluorobutane, 1,1,1,2,2,4,4-heptafluorobutane, 1,1,1,2,3,4,4,5,5,5-decafluoropentane, 1,1,1,2,2,3,3,4,4-nonafluorohexane, 1H-perfluorohexane, n-perfluorohexane, (perfluorobutyl)ethylene and perfluoro(methylmorpholine).

7. Composition according to one of Claims 1 to 6, in which the surface-active agent is a cationic surface-active agent obtained by reaction of a mono- or dialkyl phosphoric acid of general formula:

$$(RO)_p(HO)_{2\text{-}p}PO_2H \qquad \qquad (II)$$

in which p is a number ranging from 1 to 2 and R denotes a linear or branched alkyl radical containing from 1 to 18 carbon atoms, with a quaternary ammonium chloride of general formula:

$$R'_2N^+R''_2\ Cl^- \qquad \qquad (III)$$

in which R' and R'', which are identical or different, each represent a hydrogen atom or an alkyl or hydroxyalkyl radical containing 1 to 4 carbon atoms, and a fluorinated amine of general formula:

$$R_F\text{-}X\text{-}NR^1R^2 \qquad \qquad (IV)$$

in which $R_F$ represents a linear perfluoroalkyl radical containing from 2 to 20 carbon atoms, X represents a divalent bridge and the symbols $R^1$ and $R^2$, which are identical or different, each represent a hydrogen atom or an alkyl or hydroxyalkyl radical containing 1 to 4 carbon atoms.

8. Composition according to Claim 7, in which R is a butyl, hexyl, 2-ethylhexyl, octyl or tridecyl radical, R' is a dodecyl or octadecyl radical, R" is a methyl radical, X is a -$CH_2CH_2SO_2NHCH_2CH_2CH_2$- or - $C_2H_4CONHCH_2CH_2CH_2$- bridge and $R^1$ and $R^2$ are methyl radicals.

9. Composition according to one of Claims 1 to 8, in which the content of polyfluorinated alcohol(s) is between 0.1 and 30% by weight, preferably between 0.5 and 5%.

10. Composition according to one of Claims 1 to 9, in which the content of surface-active agent(s) is between 0.01 and 0.5% by weight, preferably between 0.04 and 0.2%.

11. Composition according to one of Claims 1 to 9, in the form of a concentrate containing up to 30% by weight of surface-active agent(s).

12. Use of a composition according to one of Claims 1 to 10 for the dewetting of solid surfaces.


**Patentansprüche**

1. Zusammensetzung zum Entfeuchten bzw. Trocknen, **dadurch gekennzeichnet, daß** sie aus einer Lösung mindestens eines Tensids (oberflächenaktiven Stoffes) in einer Mischung von mindestens einem fluorierten Lösemittel und mindestens einem polyfluorierten Alkohol der Formel

$$Rf - (CH_2)_n - OH \qquad\qquad (I)$$

besteht, in der n gleich 1 oder 2 ist und Rf einen linearen oder verzweigten Perfluoralkylrest mit 4 bis 8 Kohlenstoffatomen darstellt.

2. Zusammensetzung nach Anspruch 1, enthaltend mindestens einen Alkohol der Formel (I), in der n gleich 2 ist.

3. Zusammensetzung nach Anspruch 1, in der der Alkohol der Formel (I) Tridekafluoroctanol ($C_6F_{13}CH_2OH$) ist.

4. Zusammensetzung nach einem der Ansprüche 1 bis 3, in der das fluorierte Lösemittel einen normalen Siedepunkt zwischen 20 und 100 °C, vorzugsweise zwischen 30 und 75 °C, aufweist.

5. Zusammensetzung nach Anspruch 4, in der das fluorierte Lösemittel ein gesättigter oder ungesättigter fluorierter Kohlenwasserstoff mit 3 bis 6 Kohlenstoffatomen ist.

6. Zusammensetzung nach Anspruch 5, in der fluorierte Kohlenwasserstoff ausgewählt ist aus 1,1,1,3,3-Pentafluorbutan, 1,1,1,2,2,4,4-Heptafluorbutan, 1,1,1,2,3,4,4,5,5,5-Dekafluorpentan, 1,1,1,2,2,3,3,4,4-Nonafluorhexan, 1H-Perfluorhexan, n-Perfluorhexan, (Perfluorbutyl)ethylen und Perfluor(methylmorpholin).

7. Zusammensetzung nach einem der Ansprüche 1 bis 6, in der das Tensid ein kationisches Tensid ist, das erhalten ist durch Reaktion einer Mono- oder Dialkylphosphorsäure der allgemeinen Formel

$$(RO)_p(HO)_{2-p}PO_2H \qquad\qquad (II)$$

in der p eine Zahl von 1 bis 2 ist und R einen linearen oder verzweigten Alkylrest mit 1 bis 18 Kohlenstoffatomen bezeichnet,
mit einem quaternären Ammoniumchlorid der Formel

$$R'_2N^+R"_2\ Cl^- \qquad\qquad (III)$$

in der R' und R", identisch oder verschieden, jeweils Wasserstoff oder einen Alkyl- oder Hydroxyalkylrest mit 1 bis 4 Kohlenstoffatomen darstellen, und

einem fluorierten Amin der allgemeinen Formel

$$R_F - X - NR^1R^2 \qquad (IV)$$

in der $R_F$ einen linearen Perfluoralkylrest mit 2 bis 20 Kohlenstoffatomen darstellt, X eine zweiwertige Verbrückung darstellt und die Symbole $R^1$ und $R^2$, identisch oder verschieden, jeweils Wasserstoff oder einen Hydroxyalkyl- oder Alkylrest mit 1 bis 4 Kohlenstoffatomen darstellen.

8. Zusammensetzung nach Anspruch 7, in der R ein Butyl-, Hexyl-, 2-Ethylhexyl-, Octyl oder Tridecylrest ist, R' ein Dodecyl- oder Octadecylrest ist, R'' ein Methylrest ist, X eine Verbrückung $-CH_2CH_2SO_2NHCH_2CH_2CH_2$oder $-C_2H_4CONHCH_2CH_2CH_2-$ darstellt und $R^1$ und $R^2$ Methylreste sind.

9. Zusammensetzung nach einem der Ansprüche 1 bis 8, in der der Gehalt an polyfluoriertem Alkohol oder polyfluorierten Alkoholen 0,1 bis 30 Gew.-%, vorzugsweise 0,5 bis 5 Gew.-%, beträgt.

10. Zusammensetzung nach einem der Ansprüche 1 bis 9, in der der Gehalt an Tensid(en) 0,01 bis 0,5 Gew.-%, vorzugsweise 0,04 bis 0,2 Gew.-%, beträgt.

11. Zusammensetzung nach einem der Ansprüche 1 bis 9 in Form eines Konzentrates, enthaltend bis zu 30 Gew.-% Tensid(e).

12. Verwendung einer Zusammensetzung nach einem der Ansprüche 1 bis 10 zum Entfeuchten bzw. Trocknen fester Oberflächen.